# EUROPEAN PATENT SPECIFICATION

(11) **EP 1 870 257 B1**
(45) Date of publication and mention of the grant of the patent: **07.03.2012**
(21) Application number: 06731897.2
(22) Date of filing: 14.04.2006
(51) Int. Cl.: B60C 11/00, B29D 30/10, B29D 30/60, B60C 15/00

(54) **PNEUMATIC TIRE FOR MOTORCYCLE AND METHOD OF MANUFACTURING THE SAME**
LUFTREIFEN FÜR MOTORRAD UND HERSTELLUNGSVERFAHREN DAFÜR
PNEU POUR MOTOCYCLE ET PROCEDE DE FABRICATION DE CELUI-CI

(30) Priority: 15.04.2005 JP 2005118116
(43) Date of publication of application: 26.12.2007
(73) Proprietor: Bridgestone Corporation, Tokyo 104-8340 (JP)
(72) Inventor: OGAWA, Yuichiro, Kodaira-shi, Tokyo 1878531 (JP); KOYAMA, Yutaka,, Kodaira-shi, Tokyo 1878531 (JP)
(74) Representative: Whalley, Kevin
(86) International application number: PCT/JP2006/307961
(87) International publication number: WO 2006/112407

(56) References cited:
- EP-A- 0 422 881
- EP-A- 1 629 964
- EP-A- 1 674 253
- JP-A- 2000 202 921
- JP-A- 2002 079 590
- JP-A- 2003 071 945
- JP-A- 2003 071 945
- JP-A- 2003 515 487
- JP-A- 2006 062 196
- JP-A- 2006 176 078
- JP-B1- 39 028 461
- US-A- 3 223 572

## Description

### TECHNICAL FIELD

The present invention relates to a pneumatic tire for motorcycle having a tread portion consisting of a rubber strip-laminating body formed by continuously and spirally winding a rubber strip in the tire circumferential direction, and a method of producing same. In particular, the present invention addresses to improve a service life of such a tire.

### RELATED ART

Recently, in order to reduce manpower and operation time in a process of building a motorcycle tire as well as to eliminate an apparatus for manufacturing tire component members to downsize a manufacturing unit, there is proposed a method, or a so-called core building method in which a ribbon-like rubber strip is spirally winded and attached onto a building platform such as a rigid core, building drum or the like while making an overlap to form a given green tire, and the thus-formed green tire is vulcanized in a mold to produce a given product tire (see, for example, JP 2003-136611 A).
JP 2003-071945 discloses a known motorcycle tire and manufacturing method therefor.

### DISCLOSURE OF THE INVENTION

In order of a motorcycle to turn a corner, the tire is generally subjected to a so-called camber running in which a camber angle is imparted to a tire to bring a side region of the tread portion into contact with the ground. In this state, a side force is produced and its effect causes a reaction force between the grounding tread portion and the road surface in a direction from the tire equatorial plane toward a tread end. Moreover, in order to reduce the width of the tire, a tread portion of a motorcycle pneumatic tire has a smaller crown diameter than that of a four-wheel vehicle tire. Because of this characteristic, which is specific for the motorcycle pneumatic tire, a tire manufactured by a conventional core building method tends to cause a separation of rubber strips forming the surface of the tread portion and may have, therefore, difficulty to fulfill its design life.

The present invention aims to solve the these problems, and its object is to improve the durability of a motorcycle pneumatic tire in which a tread portion is formed by a rubber strip-laminating body and to provide a method of producing such tire.

In order to achieve the above-mentioned object, a pneumatic tire for a motorcycle according to the present invention is provided as claimed in claim 1.

Preferably, in this motorcycle pneumatic tire, when the tread portion is virtually divided into a central region including the tire equatorial plane and two side regions arranged to interpose the central region therebetween, the outermost layer of the central region consists of a hard rubber strip and the outermost layers of the side regions consists of a soft rubber strip. It is noted that the term "central region" as used herein refers to a region having a width of 50% of the tread grounding width with the tire equatorial plane being its center, the term "side regions" refers to regions located on both sides of the central region, and the term "hard rubber strip" refers to a rubber strip having a 300% modulus greater than that of the "soft rubber strip". The 300% modulus of the hard rubber strip is preferably within a range from 6 to 10 MPa and more preferably within a rang from 7 to 9 MPa. The 300 % modulus of the soft rubber strip is preferably within a range from 1 to 6 MPa and more preferably within a range from 2 to 5 MPa. The difference between these modulus is preferably 2 MPa or more and more preferably 3 MPa or more.

The angle formed between the imaginary extended plane and the normal line of the surface of the tread portion is within a range from 80 to 90 degrees and preferably within a range from 85 to 90 degrees.

The tire is preferably built with a rigid core.

Meanwhile, a method of producing a pneumatic tire for a motorcycle according to the present invention is provided as claimed in claim 5. Winding the rubber strips in this direction can prevent the rubber strips from being separated even when the side force acts upon them. It is noted that the term "radially-expanded state" refers to a state that an outer peripheral shape of the core generally corresponds to an inner peripheral shape of a product tire and more specifically to a state that the diameter is not changed until the vulcanization process has finished except for a change of the diameter needed to facilitate an installation to and uninstallation from a vulcanization mold.

In this method, it is preferable that the outermost layer of the central region of the tread portion consists of a hard rubber strip and the outermost layer of the side regions of the tread portions consists of a soft rubber strip. The 300% modulus of the hard rubber strip is preferably within a range from 6 to 10 MPa and more preferably within a range from 7 to 9 MPa. The 300 % modulus of the soft rubber strip is preferably within a range from 1 to 6 MPa and more preferably within a range from 2 to 5 MPa. The difference between these modulus is preferably 2 MPa or more and more preferably 3 MPa or more.

The angle formed between the imaginary extended plane and the normal line of the surface of the tread portion is within a range from 80 to 90 degrees and preferably within a range from 85 to 90 degrees.

According to the present invention, the durability of a motorcycle pneumatic tire in which a tread portion is formed by a rubber strip-laminating body can be enhanced by winding a rubber strip in a direction that can prevent the rubber strips from being separated even when the side force acts upon them.

### BRIEF DESCRIPTION OF THE DRAWINGS

FIG. 1 is a widthwise sectional view of a typical pneumatic tire for a motor cycle according to the present invention;
FIG. 2 is an enlarged sectional view of a part of a right half of the tire shown in FIG. 1;
FIG. 3 shows a typical tire producing method according to the present invention;
FIG. 4 shows a sequence of winding the rubber strip in another producing method according to the present invention;
FIG. 5 is a widthwise sectional view of a tire produced by a conventional core building method;
FIG. 6 shows a force produced on a motorcycle during cornering; and
FIG. 7 shows a force produced on a motorcycle tire during cornering.

### DESCRIPTION OF SYMBOLS

1 tire
2 bead core
3 bead portion
4 sidewall portion
5 tread portion
6 carcass
7 belt
8 rubber strip-laminating body
9 surface of the tread portion
10a outermost layer of the rubber strip
10b innermost layer of the rubber strip
11 rubber strip
12 rigid core
13 central region of the tread portion
14 side region of the tread portion

### BEST MODE FOR CARRYING OUT THE INVENTION

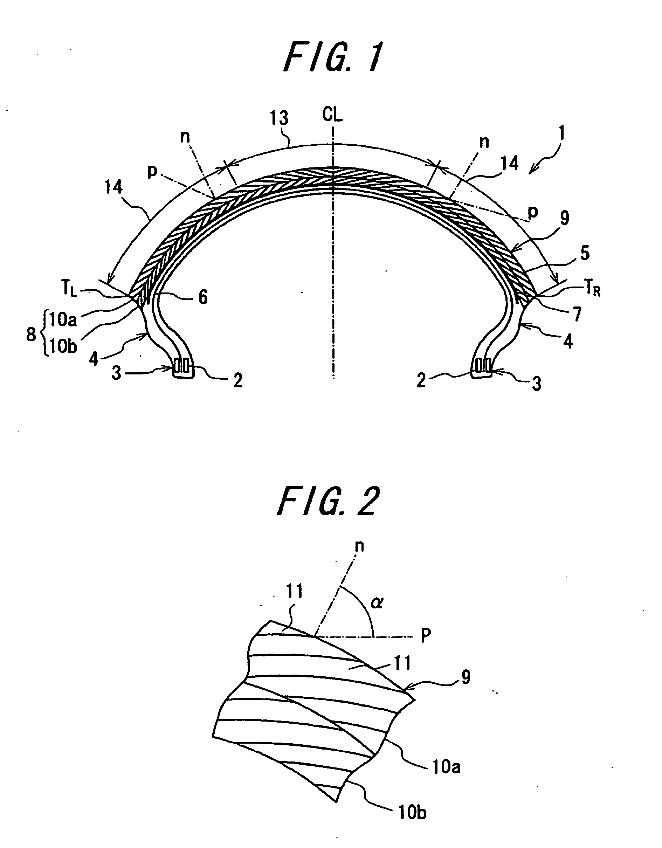

In the next, embodiments of the present invention will be described with reference to the drawings. FIG. 1 is a widthwise sectional view of a typical pneumatic tire (hereinafter referred to as "tire") for a motor cycle according to the present invention, and FIG. 2 is an enlarged sectional view of a part of a right half of the tire shown in FIG. 1.

A tire 1 shown in FIG. 1 has a pair of bead portions 3 in which respective bead cores 2 are embedded, a pair of sidewall portions 4 extending outward from the bead portions 3 in the tire radial direction, and a tread portion 5 extending between the pair of sidewall portions 4, 4. The tire 1 also contains a carcass 6 troidally extending across the bead portions 3, the sidewall portions 4 and the tread portion 5, and a belt 7 situated on the outer circumference of the crown portion of the carcass 6. The tread portion 5 is disposed outside of the belt 7 in the tire radial direction. The bead cores 2, bead portions 3, sidewall portions 4, carcass 6 and belt 7 may have similar configurations as those of a conventional tire.

The tread portion 5 consists of a rubber strip-laminating body 8 which is formed by continuously and spirally winding the rubber strip in the circumferential direction and join the adjacent side faces of the strips with each other. In the embodiment shown in FIG. 1, the rubber strip-laminating body 8 consists of two layers, an outermost layer 10a forming the surface of the tread portion and an innermost layer 10b situated inside of the outermost layer 10a.

Then, a main structural feature of the present invention is that an imaginary extended plane p defined by extending a boundary between the rubber strips 11, 11 constituting the outermost layer 10a from the surface 9 of the tread portion to the outside of the tire is situated in a tread end side T_{R} with respect to a normal line n of the surface 9 of the tread portion. In other words, in FIG. 2 showing the right half of the tread portion, the imaginary extended plane p locates in the right side with respect to the normal line n. The left half of the tread portion is configured in the opposite way. Accordingly, the outermost layer 10a as a whole has a generally axisymmetric configuration with the tire equatorial plane CL being its axis of symmetric.

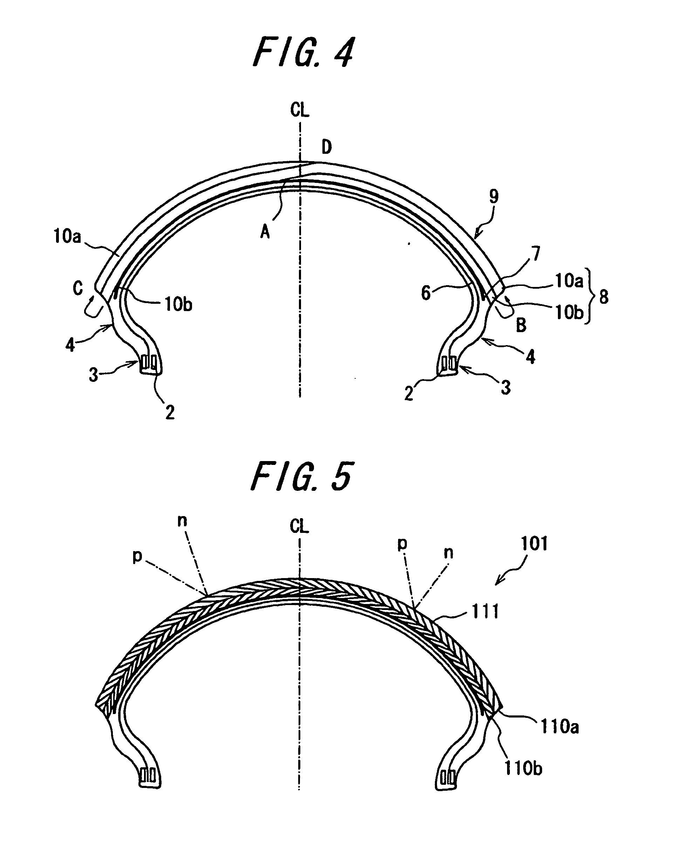

In the following, it will be discussed, along with its operation, how the above-mentioned arrangement is adopted in the invention. A conventional core building method forms a tread portion by winding a rubber strip sequentially from one tread end to the other tread end. In the tire 101 thus produced, the border p between the rubber strips 111, 111 constituting the outermost layer 110a is inclined in the tread end side in one half (left half in FIG. 5) of the tread portion, and inclined in the tire equatorial plane CL side in the other half (right half in FIG. 5) of the tread portion with respect to the normal line n of the surface of the tread portion.

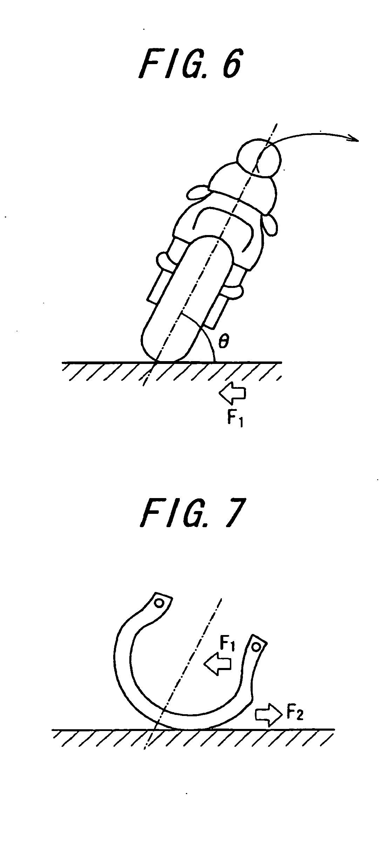

When a motorcycle goes around a corner, the vehicle body is leaned to inside of the corner to conduct a cambered turn which brings the side region of the tread portion into contact with the ground by providing a camber angle θ to the tire, as shown in FIG. 10. In this state, a side force F₁ corresponding to the traveling speed and radius of rotation acts toward the outside of the corner. In considering this act in relation to the tire, as shown in FIG. 7, a friction force F₂ acting at the same magnitude as the side force F₁ but in the opposite direction of the side force F₁ is produced as a reaction force between the grounded tread portion and the road surface due to friction. That is, a force acts on the surface of the tread portion of the tire during cornering from the tire equatorial plane to the tread end.

Thus, the conventional tire as shown in FIG. 5 has no trouble with cornering in a state where the left half of the tread portion contacts with the ground, but causes a crack between the adjacent rubber strips in a state where the right half of the tread portion contacts with the ground, since the friction force F₂ acts in a direction that splits the joint of the rubber strips 111. If the tire has been used in the latter condition, the crack develops along the boundary of the rubber strips, which is likely to cause a failure of the tire over time.

The present inventors come up with an idea that when the rubber strip is winded such that the boundary of the rubber strips constituting the outer most layer is inclined with respect to the acting direction of the friction force F₂, i.e. the imaginary extended plane defined by extending the border from the surface of the tread portion to the outside of the tire is situated in the tread end side with respect to the normal line of the surface of the tread portion, the separation between the rubber strips constituting the outermost layer can be effectively prevented to, thereby, improve the durability even during cornering at which a side force will affect. The present invention has completed based on this finding.

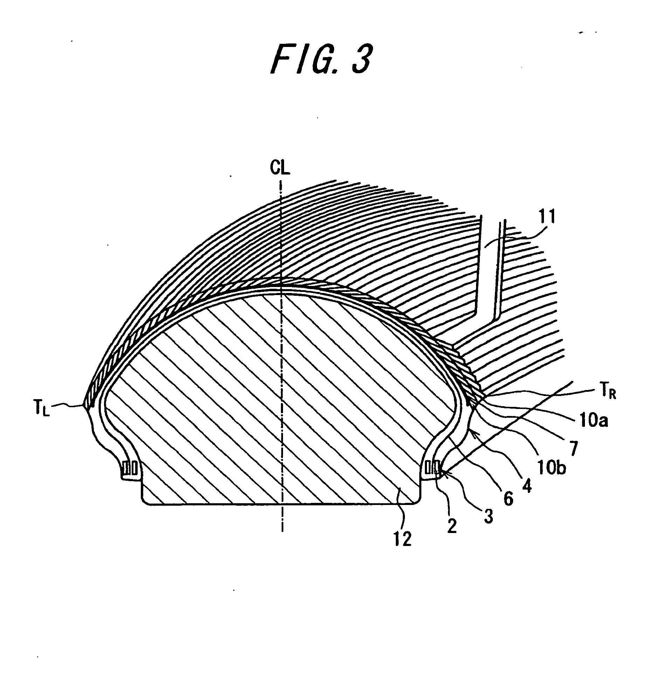

In the next, a method of producing such tire will be discussed in detail. FIG. 3 is a perspective view of a widthwise section of a rigid core 12 showing in a state where bead portions 3, sidewall portions 4 and an innermost layer 10b of a rubber strip-laminating body is formed on the circumferential face. The bead portions 3 and the sidewall portions 4 are formed on the rigid core 12 in the same manner as in the conventional core building method. In the illustrated embodiment, the innermost layer 10b is formed by winding the rubber strip from the tread end T_{R} in the right toward the tread end T_{L} in the left. The present invention, however, is not limited to this embodiment, but the rubber strip may be winded from the tread end T_{L} in the left toward the tread end T_{R} in the right, or from the both tread ends T_{L}, T_{R} toward the tire equatorial plane CL, or from the tire equatorial plane CL toward the both tread ends T_{L}, T_{R}. Then, in order to form the outermost layer 10a on the inner layer 10b in the right half of the tread portion, the rigid core 12 is radially expanded to bring its outer peripheral shape into compatible with the inner peripheral shape of the product tire and thereafter the rubber strip 11 is winded sequentially from the tread end T_{R} toward the tire equatorial plane CL, as shown in the figure. In this process, the amount of overlapping of the rubber strip 11 and its arrangement angle with respect to the normal line of the surface of the tread portion are so controlled that the imaginary extended plane defined by extending the boundary between the rubber strips 11 from the surface 9 of the tread portion to the outside of the tire is situated in the tread end side with respect to the above-mentioned normal line. When the winding of the rubber strip 11 reaches the tire equatorial plane CL, the rubber strip 11 is cut off, and the rubber strip 11 is winded on the left half of the tread portion from the tread end T_{L} toward the tire equatorial plane CL in the same manner as in the right half of the tread. A green tire of which the tread portion is formed in this way is vulcanized in a mold, and a product tire having a desired configuration of the tread portion can be obtained.

When the tire of the present invention is built with a core building method which uses a rigid core, a vulcanization pressure is generally as high as 5 MPa or more. Thus the rubber strips are hardly split at the boundary therebetween, which is advantageous to prevention of the separation. In addition, if the radius is largely expanded after laminating the rubber strip as in the conventional shaping method, the rubber strips tend to be split at their boundary to cause a separation. To the contrary, in the present invention, the lamination is conducted on the rigid core having the outer peripheral shape generally corresponding to the inner peripheral shape of the product tire, so that the radial expansion after the lamination is small and thus the separation between the rubber strips can be prevented. It is noted that a tire produced by the rigid core method has a smooth inner surface while a tire produced with a conventional bladder has a patter for bleeding air on the inner surface, so that these two tires can be easily distinguished.

In the embodiment shown in FIG. 3, the rubber strip 11 is cut off at the time of a transition of the formation of the outermost layer 10a from the right half of the tread portion to the left half of the tread portion, but the winding of the rubber strip may start from near the tire equatorial plane CL and then follow the reference sigh A, B, C and D in FIG.4 in this order. This sequence can continuously form a rubber strip-laminating body 8 without cutting the rubber strip 11.

When the tread portion 5 is virtually divided into a central region 13 including the tire equatorial plane CL and two side regions 14, 14 arranged to interpose the central region 13 therebetween, the outermost layer 10a of the central region 13 preferably consists of a hard rubber strip and the outermost layer 10a of the side regions 14, 14 preferably consists of a soft rubber strip. In a motorcycle, the central region 13 of the tread portion 5 primarily contacts the ground in the straight running, while the ground-contacting region of the tire transits from the central region 13 to the side regions 14, 14 of the tread portion 5 since the motorcycle is turned with the vehicle body being leaned. Comparing the frequencies of the straight running and the turning, the frequency of the straight running is significantly larger. Therefore, a tire being superior in both of the high-speed durability and the cornering performance can be obtained by arranging a rubber of high durability on the central region 13 while arranging a rubber of a high gripping force on the side regions 14. Accordingly, from the viewpoint of securing the high-speed durability, the 300% modulus of the hard rubber is preferably within a range from 6 to 10 MPa, and more preferably within a range from 7 to 9 MPa. From the viewpoint of securing the gripping force, the 300% modulus of the soft rubber is preferably within a range from 1 to 6 MPa, and more preferably within a range from 2 to 5 MPa. Moreover, from the viewpoint of satisfying both of the high-speed durability and the cornering performance at a high level, the difference of them is preferably at least 2 MPa, and more preferably at least 3 MPa.

The angle α formed between the imaginary extended plane p and the normal line n of the surface of the tread portion is preferably within a range from 80 to 90 degrees. If the angle α is less than 80 degrees, a separation is likely to occur between the rubber strips due to an action of the friction force caused between the surface of the tread portion and the road surface when the vehicle body returns from the leaned state to the upright state. On the other hand, if the angle α is more than 90 degrees, the thickness of the rubber strip layer becomes too small and thus the number of layers to be laminated has to be increased, which lowers the production efficiency. More preferably, the angle α is within a range from 85 to 90 degrees.

Further, the amount of overlapping of the adjacent rubber strips is preferably at least 1 mm, and more preferably at least 25% of the width of the rubber strip. This is because the smaller overlapping amount tends to cause a separation between the rubber strips due to a friction force caused between the surface of the tread portion and the road surface.

In the above, only a part of possible embodiments of the present invention are shown and described. It is appreciated that the illustrated configurations may be mutually combined or various modification may be applied without departing from the scope of the present invention as defined by the appended claims. For example, a tire in which the tread portion is formed by two rubber strip layers is shown and describe by way of example, but the tread portion may be formed by one rubber strip layer or three or more rubber strip layers.

### INDUSTRIAL APPLICABILITY

As apparent from the above-description, according to the present invention, it is possible to improve the durability of a motorcycle pneumatic tire in which a tread portion is formed by a rubber strip-laminating body, and to provide a method of producing such tire.

## Claims

1. A pneumatic tire (1) for a motorcycle having a tread portion (5) consisting of a rubber strip-laminating body (8) formed by continuously and spirally winding a rubber strip (11) in the tire circumferential direction, wherein an imaginary extended plane of an outermost layer (10a) of the rubber strip-laminating body forming the surface (9) of the tread portion defined by extending a boundary between the rubber strips constituting the outermost layer from the surface of the tread portion (9) to the outside of the tire locates in the right side with respect to a normal line of the surface of the tread portion in the right half of the tread portion, and the imaginary extended plane locates in the left side with respect to the normal line of the surface of the tread portion in the left half of the tread portion and wherein the angle formed between the imaginary extended plane and the normal line of the surface of the tread portion is within a range from 80 to 90 degrees.

2. The pneumatic tire for a motorcycle according to claim 1, wherein, when the tread portion is virtually divided into a central region including the tire equatorial plane and two side regions arranged to interpose the central region therebetween, the outermost layer of the central region consists of a hard rubber strip and the outermost layer of the side regions consists of a soft rubber strip.

3. The pneumatic tire for a motorcycle according to claim 2, wherein the difference between the 300% modulus of the hard and soft rubber strips is 2 MPa or more.

4. The pneumatic tire for a motorcycle according to any one of claims 1 to 3, wherein the tire is built on a rigid core (12).

5. A method of producing a pneumatic tire (1) for a motorcycle in which a rubber strip (11) is laminated on a rigid core (12) by continuously and spirally winding it in the tire circumferential direction to form a tread portion (5), wherein, in a process of forming an outermost layer (10a) of the rubber strip to be the surface of the tread portion, the rubber strip is so winded on the rigid core in a radially expanded state sequentially from a tread end toward the tire equatorial plane that an imaginary extended plane defined by extending a boundary between the rubber strip from the surface of the tread portion to the outside of the tire locates in the right side with respect to a normal line of the surface of the tread portion in the right half of the tread portion, and the imaginary extended plane locates in the left side with respect to the normal line of the surface of the tread portion in the left half of the tread portion and wherein the angle formed between the imaginary extended plane and the normal line of the surface of the tread portion is within a range from 80 to 90 degrees.

6. The method of producing a pneumatic tire for a motorcycle according to claim 5, wherein, when the tread portion is virtually divided into a central region (13) including the tire equatorial plane and two side regions (14) arranged to interpose the central region therebetween, the outermost layer of the central region of the tread portion consists of a hard rubber strip and the outermost layer of the side regions of the tread portions consists of a soft rubber strip.

7. The method of producing a pneumatic tire for a motorcycle according to claim 6, wherein the difference between the 300% modulus of the hard and soft rubber strips is 2 MPa or more.

## Patentansprüche

1. Luftreifen (1) für ein Motorrad, der einen Laufflächenabschnitt (5) hat, der aus einem Gummistreifen-Laminierkorpus (8) besteht, der geformt ist durch das durchgehende und spiralförmige Wickeln eines Gummistreifens (11) in der Reifenumfangsrichtung, wobei sich eine imaginäre erweiterte Ebene einer äußersten Lage (10a) des Gummistreifen-Laminierkorpus, welche die Oberfläche (9) des Laufhächenabschnitts bildet, definiert durch das Erweitern einer Grenze zwischen den Gummistreifen, welche die äußerste Lage bilden, von der Oberfläche (9) des Laufflächenabschnitts bis zu der Außenseite des Reifens, in der rechten Hälfte des Laufflächenabschnitts in der rechten Seite in Bezug auf eine senkrechte Linie der Oberfläche des Laufflächenabschnitts befindet und sich die imaginäre erweiterte Ebene in der linken Hälfte des Laufflächenabschnitts in der linken Seite in Bezug auf die senkrechte Linie der Oberfläche des Laufflächenabschnitts befindet und wobei der Winkel, der zwischen der imaginären erweiterten Ebene und der senkrechten Linie der Oberfläche des Laufflächenabschnitts gebildet wird, innerhalb eines Bereichs von 80 bis 90 Grad liegt.

2. Luftreifen für ein Motorrad nach Anspruch 1, wobei, wenn der Laufflächenabschnitt virtuell in einen Mittelbereich, der die Reifen-Äquatorialebene, einschließt, und zwei Seitenbereiche, die so angeordnet sind, dass der Mittelbereichs zwischen denselben eingefugt ist, geteilt wird, die äußerste Lage des Mittelbereichs aus einem harten Gummistreifen besteht und die äußerste Lage der Seitenbereiche aus einem weichen Gummistreifen besteht.

3. Luftreifen für ein Motorrad nach Anspruch 2, wobei der Unterschied zwischen dem 300%-Modul des harten und des weichen Gummistreifens 2 MPa oder mehr beträgt. :

4. Luftreifen für ein Motorrad nach einem der Ansprüche 1 bis 3, wobei der Reifen auf einem steifen Kern (12) aufgebaut ist.

5. Verfahren zum Herstellen eines Luftreifens (1) für ein Motorrad, wobei ein Gummistreifen (11) auf einen steifen Kern (12) laminiert wird durch das durchgehende und spiralförmige Wickeln desselben in der Reifenumfangsriehtung, um einen Laufflächenabschnitt (5) zu formen, wobei in einem Vorgang des Formens einer äußersten Lage (10a) des Gummistreifens, welche die Oberfläche des Laufflächenabschnitts sein soll, der Gummistreifen so in einem radial ausgedehnten Zustand der Reihe nach von einem Laufflächenende zu der Reifen-Äquatorialebene hin auf den steifen Kern gewickelt wird, dass sich eine imaginäre erweiterte Ebene, definiert durch das Erweitern einer Grenze zwischen dem Gummistreifen von der Oberfläche des Laufflächenabschnitts bis zu der Außenseite des Reifens, in der rechten Hälfte des Laufflächenabschnitts in der rechten Seite in Bezug auf eine senkrechte Linie der Oberfläche des Laufflächenabschnitts befindet und sich die imaginäre erweiterte Ebene in der linken Hälfte des Laufflächenabschnitts in der linken Seite in Bezug auf die senkrechte Linie der Oberfläche des Laufflächenabschnitts befindet und wobei der Winkel, der zwischen der imaginären erweiterten Ebene und der senkrechten Linie der Oberfläche des Laufflächenabschnitts gebildet wird, innerhalb eines Bereichs von 80 bis 90 Grad liegt.

6. Verfahren zum Herstellen eines Luftreifens für ein Motorrad nach Anspruch 5, wobei, wenn der Laufflächenabschnitt virtuell in einen Mittelbereich (13), der die Reifen-Äquatorialebene einschließt, und zwei Seitenbereiche (14), die so angeordnet sind, dass der Mittelbereich zwischen denselben eingefügt ist, geteilt wird, die äußerste Lage des Mittelbereichs des Laufflächenabschnitts aus einem harten Gummistreifen besteht und die äußerste Lage der Seitenbereiche des Laufflächenabschnitts aus einem weichen Gummistreifen besteht.

7. Verfahren zum Herstellen eines Luftreifens für ein Motorrad nach Anspruch 6, wobei der Unterschied zwischen dem 300%-Modul des harten und des weichen Gummistreifens 2 MPa oder mehr beträgt.

## Revendications

1. Bandage pneumatique (1) pour un motocycle, comprenant une partie de bande de roulement (5) consistant en un corps à bandes de caoutchouc stratifiées (8), formé en enroulant de manière continue et en spirale une bande de caoutchouc (11) dans la direction circonférentielle du bandage pneumatique, un plan étendu imaginaire d'une couche externe extrême (10a) du corps à bandes de caoutchouc stratifiées, formant la surface (9) de la partie de bande de roulement, défini en étendant une limite entre les bandes de caoutchouc constituant la couche externe extrême de la surface (9) de la partie de bande de roulement vers l'extérieur du bandage pneumatique, étant situé sur le côté droit par rapport à une ligne normale de la surface de la partie de bande de roulement dans la moitié de droite de la partie de bande de roulement, le plan étendu imaginaire étant situé sur le côté gauche par rapport à la ligne normale de la surface de la partie de bande de roulement dans la moitié de gauche de la partie de bande de roulement, l'angle formé entre le plan étendu imaginaire et la ligne normale de la surface de la partie de bande de roulement étant compris dans un intervalle allant de 80 à 90 degrés

2. Bandage pneumatique pour une motocycle selon la revendication 1, dans lequel, lorsque la partie de bande de roulement est virtuellement divisée en une région centrale, englobant le plan équatorial du bandage pneumatique et deux régions latétales positionnées de sorte que la région centrale est agencée entre elles, la couche externe extrême de la région centrale est composée d'une bande de caoutchouc dur, la couche externe extrême des régions latérales étant composée d'une bande de caoutchouc mou.

3. Bandage pneumatique pour un motocycle selon la revendication 2, dans lequel la différence entre le module à 300% des bandes de caoutchouc dur et mou correspond à 2 MPa ou plus.

4. Bandage pneumatique pour un motocycle selon l'une quelconque des revendications 1 à 3, dans lequel le bandage est construit sur un noyau rigide (12).

5. Procédé de production d'un bandage pneumatique (1) pour un motocycle, dans lequel une bande de caoutchouc (11) est appliquée par stratification sur un noyau dur (12) en l'enroulant de manière continue et en spirale dans la direction circonférentielle du bandage pneumatique pour former une partie de bande de roulement (5), dans lequel, dans un processus de formation d'une couche externe extrême (10a) de la bande de caoutchouc devant constituer la surface de la partie de bande de roulement, la bande de caoutchouc est enroulée sur le noyau rigide dans un état à expansion radiale, de manière séquentielle, d'une extrémité de la bande de roulement vers le plan équatorial du bandage pneumatique, de sorte qu'un plan étendu imaginaire défini en étendant une limite entre la bande de caoutchouc, de la surface de la partie de bande de roulement vers l'extérieur du bandage pneumatique, est situé sur le côté droit par rapport à une ligne normale de la surface de la partie de bande de roulement, dans la moitié de droite de la partie de bande de roulement, le plan étendu imaginaire étant situé sur le côté gauche par rapport à la ligne normale de la surface de la partie de bande de roulement, dans la moitié de gauche de la partie de bande de roulement, l'angle forme entre le plan étendu imaginaire et la ligne normale de la surface de la partie de bande de roulement étant compris dans un intervalle allant de 80 à 90 degrés.

6. Procédé de production d'un bandage pneumatique pour un motocycle selon la revendication 5, dans lequel, lorsque la partie de bande de roulement est virtuellement divisée en une région centrale (13) englobant le plan équatorial du bandage pneumatique, et deux régions latérales (14) positionnées de sorte que la région centrale est agencée entre elles, la couche externe extrême de la région centrale de la partie de bande de roulement est composée d'une bande de caoutchouc dur, la couche externe extrême des régions latérales de la partie de bande de roulement étant composée d'une bande de caoutchouc mou.

7. Procédé de production d'un bandage pneumatique pour un motocycle selon la revendication 6, dans lequel la différence entre le module à 300% des bandes de caoutchouc dur et mou correspond à 2 MPa ou plus.
